# EUROPEAN PATENT APPLICATION

(11) **EP 3 598 805 A1**
(43) Date of publication of application: **22.01.2020**
(21) Application number: 18183800.4
(22) Date of filing: 16.07.2018
(51) Int. Cl.: H04W 52/02, H04B 5/00

(54) **APPARATUS FOR CONFIGURATION OF A SENSOR**

(71) Applicant: ABB Schweiz AG, 5400 Baden (CH)
(72) Inventor: König, Kai, 69190 Walldorf (DE); Wildermuth, Stephan, 69514 Laudenbach (DE); Kaul, Holger, 68165 Mannheim (DE); Szász, Paul, 68723 Plankstadt (DE); Gebhardt, Jörg, 55130 Mainz (DE); Orman, Maciej, 32-052 Radziszow (PL)
(74) Representative: Schmidt, Karl Michael

(57) **Abstract**

The present invention relates to an apparatus (10) for configuration of a sensor. It is described to utilise (410) a very short range wireless communication interface (20, 110) and a sensing element (30, 120) to identify a communication device (50) that is in close proximity to a sensor (40, 100) on the basis of a first signal transmitted from the communication device. The wireless interface is utilized (420) to receive configuration information relating to the sensor from the identified communication device on the basis of the first signal and/or a second signal transmitted from the communication device.

## Description

### FIELD OF THE INVENTION

The present invention relates to an apparatus for configuration of a sensor, a sensor, systems for configuration of a sensor, and a method for configuration of a sensor.

### BACKGROUND OF THE INVENTION

Sensor devices introduced into a network must be configured, often during installation, and in many cases a secondary communications channel is needed for this configuration, often a wired "service port". This is not always convenient.

### SUMMARY OF THE INVENTION

Therefore, it would be advantageous to have an improved technology for the configuration of sensor devices.

The object of the present invention is solved with the subject matter of the independent claims, wherein further embodiments are incorporated in the dependent claims. It should be noted that the following described aspects of the invention apply also for the apparatus for configuration of a sensor, the a sensor, the systems for configuration of a sensor, and the method for configuration of a sensor.

In a first aspect, there is provided an apparatus for configuration of a sensor, comprising:
- a wireless interface; and
- a sensing element.

The apparatus is configured to communicate with a sensor. The apparatus is configured to utilize the wireless interface to communicate by means of very short range wireless communication. The apparatus is configured to utilize the wireless interface to identify a communication device that is in close proximity to the apparatus on the basis of a first signal transmitted from the communication device. The apparatus is configured to utilize the wireless interface to receive configuration information relating to the sensor from the identified communication device on the basis of the first signal and/or a second signal transmitted from the communication device.

In this manner, a simple mechanism is provided to configure a sensor that is introduced into a network, through automatic detection by proximity of a communication device such as a mobile phone in order that the configuration can be performed. There are a low number of parts required, and provides for utility in both retrofit and primary installations. In particular, it is advantageous that this configuration can be performed already before the device is connected to, and powered by, the network.

Thus, during commissioning and installation of sensors (such as smart sensors for motors and field sensors and process sensors), configuration steps are required to be performed. This configuration can be performed through bringing a mobile phone into close proximity of an apparatus for configuration of a sensor, that can be a part of the sensor itself or be an add-on module for the sensor, and even touching the sensor. Automatic identification is performed by proximity, and configuration data or information such as network information, unique ID or location, and information on how to process measured data that can depend upon location can be provided, as well as other configuration information. The available bandwidth of very short range wireless communication, such as via Near Field Communication (NFC) can be higher than that for ultra-low-power long-range wireless interfaces frequently used by sensors, and as such the configuration process can be faster than that previously achievable. Thus, the apparatus provides for reduced cost and improved installation time, for example as sensor housings do not need to be opened during installation and issues relating to contamination due to the opening of housings or the plugging into a communication port are mitigated.

In an example, the means of very short range wireless communication is Near-Field Communication (NFC).

In other words, the wireless interface is a NFC wireless interface.

In an example, the means of very short range wireless communication is RFID.

In other words, the wireless interface is an RFID wireless interface.

In an example, the apparatus is configured to utilize power in the first signal and/or second signal to communicate with the sensor.

In an example, the apparatus is configured to utilize the wireless interface to communicate with the sensor.

In a second aspect, there is provided a sensor, comprising:
- a wireless interface; and
- a sensing element.

The sensor is configured to utilize the wireless interface to communicate by means of very short range wireless communication. The sensor is configured to utilize the wireless interface and sensing element to identify a communication device that is in close proximity to the sensor on the basis of a first signal transmitted from the communication device. The sensor is configured to utilize the wireless interface to receive configuration information relating to the sensor from the identified communication device on the basis of the first signal and/or a second signal transmitted from the communication device.

In a similar manner to the apparatus that can be an add-on to a sensor, here the sensor itself has the functionality to be configured through automatic detection by proximity of a communication device such as a mobile phone in order that the configuration can be performed. Advantages as described for the apparatus equally apply to the provided sensor.

Furthermore, by providing for configuration in this manner through a very short range wireless communication proximity based solution, pins and other forms of direct electric contact are not required, and as such the present solution that can be an NFC-based solution is much less sensitive to dirt and dust deposits. In particular, a battery pack, or battery extension pack, can benefit from this, as could a temperature sensor in the mounting module, which then can directly touch the housing of the machinery.

In an example, the sensor is configured to awaken from a sleep mode on the basis of the first signal transmitted from the communication device.

In this manner, no batteries are required.

In other words, a "zero power" interface that works even if the power source (battery or energy harvesting) is not yet available can be used rather than the sensor being in a powered state. To put this another way, the configuration interface is used as a "wake-up trigger" to awaken the device from an inactive mode in which power consumption is zero or near-zero, thereby extending shelf life in comparison to sleep modes that actively listen for wake-up signals. This also mitigates the need to provide disadvantageous features such as wake-up buttons or dedicated installation steps such as inserting a battery, that require time, extra components, or a housing that can be opened by the user, all of which are not needed in present sensor design.

In an example, to awaken from the sleep mode comprises utilization of power in the first signal.

In an example, the sensor is configured to utilize the power in the first signal and/or second signal to store the configuration information in a memory of the sensor.

In an example, the sensor is configured to utilize the power in the first signal and/or second signal to read information stored in a memory of the sensor.

In an example, the communication device is configured to transmit the configuration information in the second signal on the basis of information in a communication signal received from the sensor.

In an example, the communication device is configured to obtain the configuration information from a sensor database on the basis of the information in the communication signal received from the sensor.

In other words, automatic connection of a configuration app to a sensor database, for fastest and easiest commissioning of new sensors is provided.

In a third aspect, there is provided a system for configuration of a sensor, comprising:
- an apparatus according to the first aspect;
- a sensor; and
- a communication device.

The apparatus is configured to receive the configuration information from the communication device.

In a fourth aspect, there is provided a system for configuration of a sensor, comprising:
- a sensor (100) according to the second aspect; and
- a communication device.

The sensor is configured to receive the configuration information from the communication device.

In a fifth aspect, there is provided a method for configuration of a sensor, comprising:
a) utilising a very short range wireless communication interface and a sensing element to identify a communication device that is in close proximity to a sensor on the basis of a first signal transmitted from the communication device; and
b) utilising the wireless interface to receive configuration information relating to the sensor from the identified communication device on the basis of the first signal and/or a second signal transmitted from the communication device.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
- Fig. 1: shows a schematic representation of an example of an apparatus for configuration of a sensor;
- Fig. 2: shows a schematic representation of an example of a sensor;
- Fig. 3: shows a schematic representation of an example of a system for configuration of a sensor;
- Fig. 4: shows a schematic representation of an example of a system for configuration of a sensor;
- Fig. 5: shows a method for configuration of a sensor;
- Fig. 6: shows a detailed example showing the configuration of a sensor device;
- Fig. 7: shows an example of the configuration of a sensor device;
- Fig. 8: shows an example of the configuration of a sensor device;
- Fig. 9: shows an example of the configuration of a sensor device; and
- Fig. 10: shows an example of the configuration of a sensor device.

### DETAILED DESCRIPTION OF EMBODIMENTS

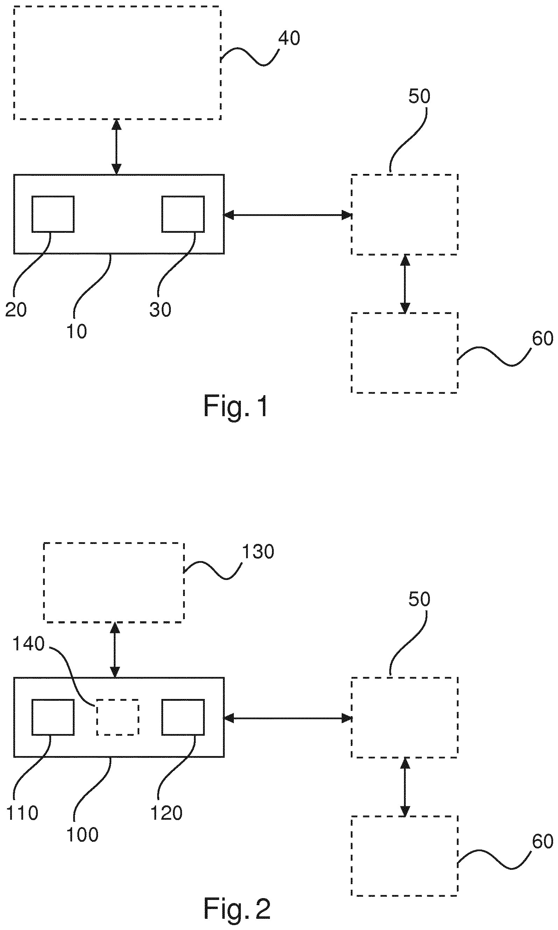

Fig. 1 shows an example of an apparatus 10 for configuration of a sensor. The apparatus 10 comprises a wireless interface 20 and a sensing element 30. The apparatus 10 is configured to communicate with a sensor 40. The apparatus 10 is configured to utilize the wireless interface 20 to communicate by means of very short range wireless communication. The apparatus 10 is configured to utilize the wireless interface 20 and sensing element 30 to identify a communication device 50 that is in close proximity to the apparatus 10 on the basis of a first signal transmitted from the communication device 50. The apparatus 10 is configured to utilize the wireless interface 20 to receive configuration information relating to the sensor 40 from the identified communication device 50 on the basis of the first signal and/or a second signal transmitted from the communication device.

In an example, the communication device is a mobile phone.

According to an example, the means of very short range wireless communication is Near-Field Communication (NFC).

According to an example, the means of very short range wireless communication is RFID.

In an example, the apparatus is configured to awaken from a sleep mode on the basis of the first signal transmitted from the communication device.

In an example, to awaken from the sleep mode comprises utilization of power in the first signal.

According to an example, the apparatus is configured to utilize power in the first signal and/or second signal to communicate with the sensor.

In an example, the apparatus is configured to utilize power in the first signal and/or second signal to store the configuration information in a memory of the sensor.

In an example, the apparatus is configured to utilize the power in the first signal and/or second signal to read information stored in a memory of the sensor.

In an example, the memory of the sensor is a non-volatile memory.

According to an example, the apparatus is configured to utilize the wireless interface to communicate with the sensor.

In an example, the communication device is configured to transmit the configuration information in the second signal on the basis of information in a communication signal received from the apparatus.

In an example, the communication device is configured to obtain the configuration information from a sensor database 60 on the basis of the information in the communication signal received from the apparatus.

Fig. 2 shows an example of a sensor 100. The sensor 100 comprises a wireless interface 110 and a sensing element 120. The sensor 100 is configured to utilize the wireless interface 110 to communicate by means of very short range wireless communication. The sensor 100 is configured to utilize the wireless interface 110 and sensing element 120 to identify a communication device 50 that is in close proximity to the sensor 100 on the basis of a first signal transmitted from the communication device. The sensor 100 is configured to utilize the wireless interface 110 to receive configuration information relating to the sensor 100 from the identified communication device 50 on the basis of the first signal and/or a second signal transmitted from the communication device 50.

In an example, the communication device is a mobile phone.

In an example, the means of very short range wireless communication is Near-Field Communication (NFC).

In an example, the means of very short range wireless communication is RFID.

According to an example, the sensor is configured to awaken from a sleep mode on the basis of the first signal transmitted from the communication device.
According to an example, to awaken from the sleep mode comprises utilization of power in the first signal.

In an example, the sensor is configured to utilize the power in the first signal and/or second signal to communicate with the communication device.

According to an example, the sensor is configured to utilize the power in the first signal and/or second signal to store the configuration information in a memory of the sensor.

According to an example, the sensor is configured to utilize the power in the first signal and/or second signal to read information stored in a memory of the sensor.

In an example, the memory is a non-volatile memory.

In an example, the sensor is configured to utilize the wireless interface to communicate with a central data processing unit 130 external to the sensor.

In an example, the sensor is configured to utilize a communication interface 140 other than the wireless interface to communicate with the central data processing unit 130 external to the sensor.

In an example, the communication interface 140 is a long range wireless interface.

In an example, the communication interface 140 is a wired interface.

According to an example, the communication device is configured to transmit the configuration information in the second signal on the basis of information in a communication signal received from the sensor.

According to an example, the communication device is configured to obtain the configuration information from a sensor database 60 on the basis of the information in the communication signal received from the sensor.

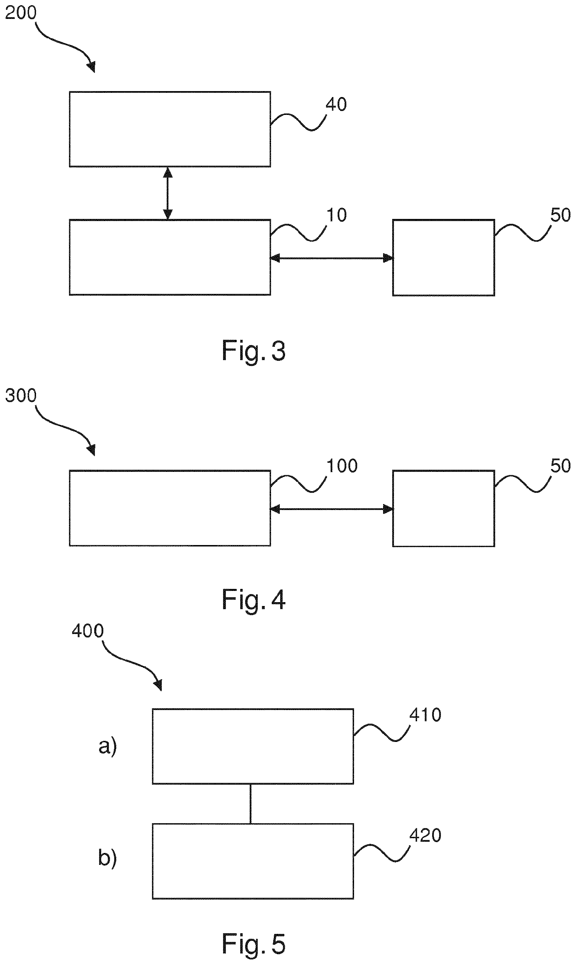

Fig. 3 shows an example of a system 200 for configuration of a sensor. The system 200 comprises an apparatus 10 as described above with respect to any of the examples of Fig. 1. The system 200 also comprises a sensor 40 and a communication device 50. The apparatus 10 is configured to receive the configuration information from the communication device 50.

Fig. 4 shows an example of a system 300 for configuration of a sensor. The system 300 comprises a sensor 100 as described above with respect to any of the examples of Fig. 2. The system 300 also comprises a communication device 50. The sensor 100 is configured to receive the configuration information from the communication device 50.

Fig. 5 shows a method 400 for configuration of a sensor in its basic steps. The method 400 comprises:
- in a utilising step 410, also referred to as step a), utilising a very short range wireless communication interface 20, 110 and a sensing element 30, 120 to identify a communication device 50 that is in close proximity to a sensor 40, 100 on the basis of a first signal transmitted from the communication device; and
- in a utilising step 420, also referred to as step b), utilising the wireless interface to receive configuration information relating to the sensor from the identified communication device on the basis of the first signal and/or a second signal transmitted from the communication device.

In an example, the communication device is a mobile phone.

In an example, step a) comprises utilising Near-Field Communication (NFC).

In an example, step a) comprises utilising RFID.

In an example, step a) comprises awakening from a sleep mode on the basis of the first signal transmitted from the communication device.
In an example, awakening from the sleep mode comprises utilising power in the first signal.

In an example, the method comprises utilising the power in the first signal and/or second signal to communicate with the communication device.

In an example, the method comprises utilising the power in the first signal and/or second signal to store the configuration information in a memory of the sensor.

In an example, the method comprises utilising the power in the first signal and/or second signal to read information stored in a memory of the sensor.

In an example, the memory is a non-volatile memory.

In an example, the method comprises utilising the wireless interface to communicate with a central data processing unit external to the sensor.

In an example, the method comprises utilising a communication interface other than the wireless interface to communicate with a central data processing unit external to the sensor.

In an example, the communication interface is a long range wireless interface.

In an example, the communication interface is a wired interface.

In an example, the method comprises the communication device transmitting the configuration information in the second signal on the basis of information in a communication signal sent via the very short range wireless communication interface.

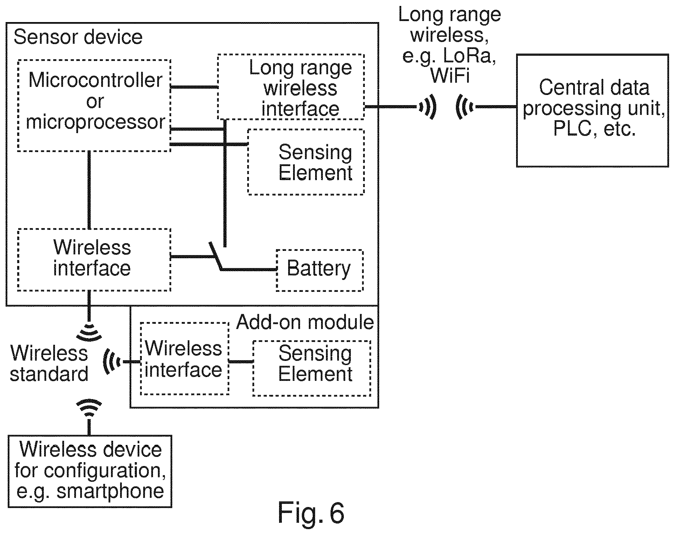

In an example, the communication device is configured to obtain the configuration information from a sensor database on the basis of the information in the communication signal sent via the very short range wireless communication interface. The apparatus, sensor, systems and method as described above with respect to Figs. 1-5 are explained in specific detail with respect to Figs. 6-10.

Sensor devices introduced into a network must be configured, often during installation, and in many cases a secondary communications channel is needed for this configuration, often a wired "service port". As described above, and now described with respect to use cases, Near-Field Communication (NFC) or similar wireless means of very short range wireless communication is used for sensor device configuration, with the advantages of: automatic identification by proximity, possibility to use smartphone hardware, low number of parts, no batteries. A chambered design can be provided, in addition to passive configuration data, automatic database connection, augmented reality for location storage and localization. The presently described means of configuration can useful for process industry (or discrete manufacturing related) wireless field devices, condition monitoring devices for power transmission or distribution, other electrical, or manufacturing equipment as well as for monitoring other equipment, building automation sensors, or other digital sensor solutions for wireless and wired sensor devices, both in retrofit and in primary installations.

During commissioning and installation of sensors, e.g. sensors for condition monitoring, but also when installing e.g. field devices / process sensors, configuration steps are performed on previously equal and interchangeable sensors based on their location. Configuration data may include, network information, e.g. an unique ID or location information, and information on how to process the measured data depending on location. Many wireless and wired network protocols, e.g.WirelessHART, require an unique ID to be assigned to each device joining the network; in these cases, configuration is required before joining, and must be performed through a different communications channel. In addition, configuration data may exceed the amount of data that can be transferred within reasonable time through the network, in particular through ultra-low-power long-range wireless networks. The presently described means of configured sensor devices mitigates this. Furthermore, in existing systems a wired auxiliary port used to plug in a device for configuration is a common solution, e.g. in the SensyTemp TSP300-W wireless temperature sensor, that requires more space, an opening (or opening the housing during installation), and additional components. Again, the presently described means of configured sensor devices mitigates this.

Fig. 6 shows an example of the presently described solution for the configuration of a sensor, relating to the use case of a sensor for condition monitoring, with wake-up trigger and connection to other sensor modules.

As shown, Near-Field Communication (NFC) is provided as an auxiliary communication interface for configuration, commissioning, and installation. This wireless standard operating as shown in the bottom left of the figure can for example be RFID or NFC. This is in addition to a primary wired or mid-to long-range communication interface. This brings the following beneficial properties:
- Automatic identification: Communication is limited to devices practically touching the NFC sender device;
- Common standard, no dedicated hardware needed: a smartphone with NFC interface and a suitable app is only required;
- Minimal number of parts are needed on sensor device side: Only an NFC antenna and a suitable off-the-shelf NFC chip;
- Passive power supply: All power needed to store or read configuration data is provided by the communication signal transmitting or requesting said data. Therefore, the auxiliary communication can be used even if the main power source is still fully deactivated, e.g. in a storage or transportation mode, or has even been removed (e.g. batteries during air transport).

Continuing with Fig. 6, the solution provided has applicability, but is not limited to, applications in which custom mounts, holders, clamps, or other fixation or mounting devices or parts are required to connect a sensor device to machinery being monitored. Thus, a generic component containing generic measurement electronics, combined with a customized mounting component that is specific to the machinery onto which the sensor device is being mounted can be provided, and where simplicity of configuration is provided through NFC proximity wireless communication. The advantage over pins and other forms of direct electric contact is that an NFC-based solution is much less sensitive to dirt and dust deposits. In particular, a battery pack, or battery extension pack, could benefit from this if e.g. inductive power transfer through a suitable housing is performed, as could a temperature sensor in the mounting module, which then can directly touch the housing of the machinery.

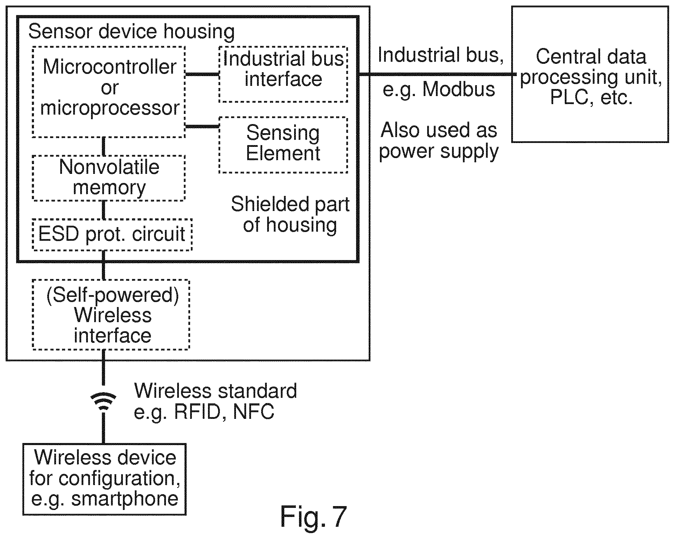

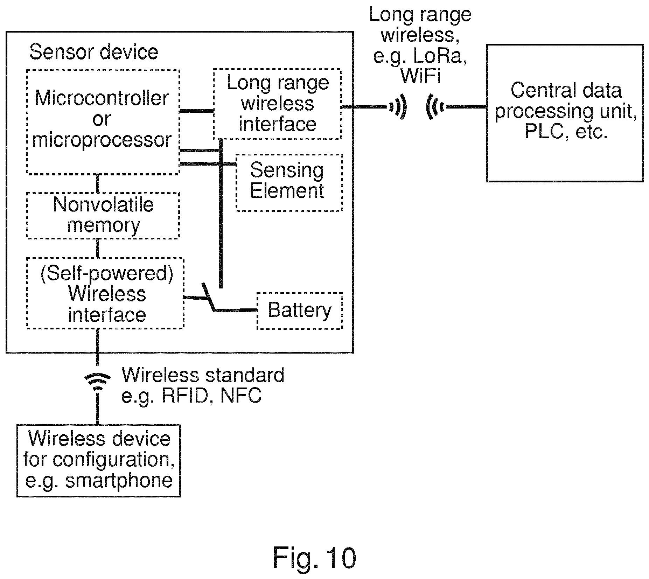

As shown in Fig. 6, and indeed in figs 7-10, the same NFC antenna can, in principle, be used both for commissioning / installation, and for communication between modules. NFC can, by nature, be used for communication of data, and also as a means of power supply to power low-power sensors. Beneficial use of such low-power sensors during commissioning, e.g. for calibration purposes, location purposes, or to aid in installation, could be envisioned. It is also to be noted, that the NFC can be used as a wake-up trigger, shown in more detail in Fig. 10.

Fig. 7 shows an example of the presently described solution for the configuration of a sensor, with a chambered design shown for the use case of Medium Voltage (MV) switchgear, also enabling passive configuration data transfer. With respect to the chambered design, in ESD-critical areas, the main electronics are within compartments with a shielded housing. Such shielding is achieved e.g. by a metallic housing, or metallization of the inner or outer surface of a nonconductive housing. The RFID/NFC antenna is in a separate compartment, and separated from the rest of the device by protection circuitry. This allows the RFID / NFC antenna to be placed fully inside the housing, offering improved protection from mechanical impact compared to an exposed antenna. With respect to the passive configuration data transfer, the NFC data is written to an ultra-low-power nonvolatile memory, so that power drawn from transmission is sufficient. Upon startup, the main sensor circuit reads from that special memory to check if updated configuration data is present - see also Fig. 10.

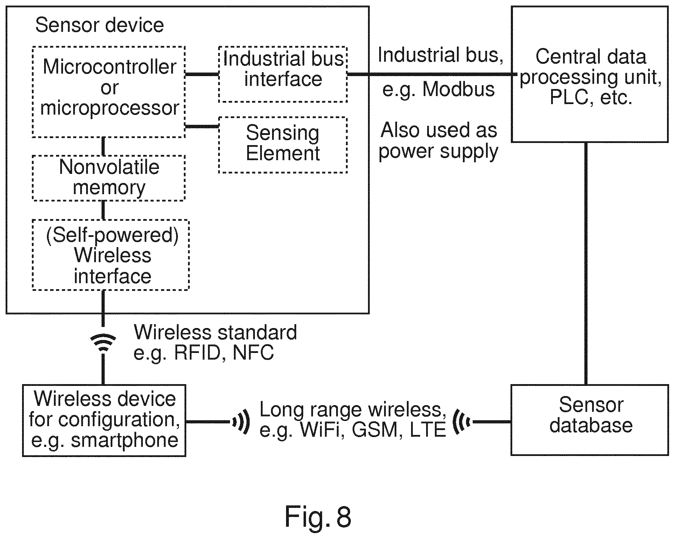

Fig. 8 shows an example of the presently described solution for the configuration of a sensor, for the use case for MV switchgear, including the passive configuration data transfer and connection of the configuration app to a sensor database. As an alternative to the long range wireless connection, a functionality including the download of the information that was stored during commissioning in the wireless device via cable or short range wireless can be used. Thus, in Fig. 8 the automatic connection of the configuration app to a sensor database is provided, enabling the fastest and easiest commissioning of new sensors. This sensor database can, in turn, be connected to the central data processing unit. Information obtained during commissioning can be used for future maintenance planning, or for operation of the sensor. Such information might include sensor location including description or images, instructions and notes on accessing or mounting the sensor, or configuration and calibration data. Availability information of energy harvesting power sources might also be noted and stored. An Augmented reality (AR) device, that shows information on sensors onto virtual reality / augmented reality goggles (or contact lenses, ...) can be provided. During set-up, this AR device can be used to specify the exact position of the device.

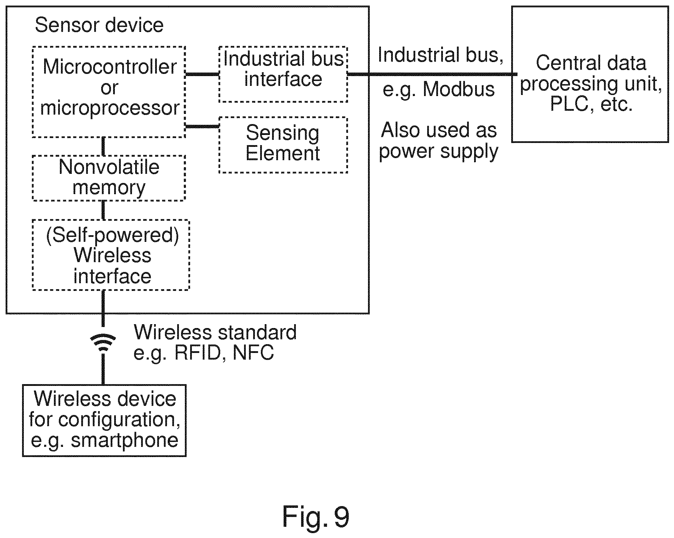

Fig. 9 shows an example of the presently described solution for the configuration of a sensor, for the use case of electrical equipment such as switchgear, including the passive configuration data transfer.

Consider the historical situation of the case of a piece of machinery, e.g. switchgear to be condition monitored by one or multiple discrete sensor devices, e.g. infrared temperature sensors observing the busbars, busbar connections, and other components. These sensors may be mounted on the wall of an enclosure of the machinery, or on parts of the machinery itself. For this use case, assume that the sensors are connected by wired communication to a central data processing unit (e.g. PLC) by a standardized industrial communication method, such as HART, Foundation Fieldbus or Modbus. This communication scheme has two weaknesses: First, during commissioning, certain data needs to be transferred, including a network ID of the device as specified in the communication protocol used, and data depending on position. Pre-configuring such information would have the disadvantage that it is not possible to use any sensor device of a bulk shipment of equal devices at any location, but that only one location-specific preconfigured device can be installed at each location. Furthermore, configuration during installation and commissioning enables additional calibration and configuration steps, which take into account observations made or measurements taken during installation. It should also be noted that certain (legacy variants of) industrial communication standards such as Modbus are very limited in bandwidth compared to certain short-range wireless communication methods such as NFC as provided as shown in the solution of Fig. 9, that mitigates for example the time-consuming uploading of configuration data via the industrial bus that was historically required.

Fig. 10 shows an example of the presently described solution for the configuration of a sensor, for the use case of condition monitoring of motors or generators (or for other use cases, including the use case of field instruments), with a wake-up trigger.

Consider also the historical case of a (retrofit or factory-installed) battery powered condition monitoring system, e.g. a vibration and temperature (or other variables, including humidity, magnetic or electric field, acceleration, shock, air flow etc.) monitoring device mounted onto electric motors or generators. (Other use cases could be other electrical or industrial equipment including transformers, switchgear or breakers, structural components, infrastructure, cables or wires, converters, rectifiers, drives, conveyor belts and rollers, metal or paper mill equipment, mining and ore processing equipment including ore and rock mills, propulsion system components e.g. for trains or ships, robots or parts thereof, compressors, valves and other parts of a process plant or other systems of piped fluids, or storage facilities can result in similar use cases). Assume for this historical use case a wireless long-range connection is used that is limited in how much energy or power it can consume due to limitations of the power supply, which may be energy harvesting, non-rechargeable batteries or other energy storage, rechargeable batteries or other energy storage. Long-range ultra-low-power communication methods exist that maximize range while minimizing power consumption but the trade-off is very low data transfer rates; using such methods is favorable in case of limited energy or power. Therefore, referring to the present solution as exemplified in Fig. 10, one benefit of a second NFC-based communication channel will be the possibility to use the long-range channel to send out only rather generic alerts, requiring low bandwidth. Detailed data records (e.g. historic data, detailed vibration spectra) can then be read out over the high-bandwidth short-range NFC interface by maintenance personnel sent on site in reaction to the alert, or during routine maintenance rounds. As it is short-ranged, power consumption at high data rates will be significantly lower than for a long-range high-bandwidth communication protocol. A particular advantage of NFC communication is that configuration of a sensor device is possible even if the sensor device is completely unpowered, if suitable chips with non-volatile memory that can be accessed both wirelessly (using the power provided by the radio signal, such as in passive RFID) and from the sensor device (if powered on) are utilized. In such a case, the sensor device can stay inactive for configuration (typically done at installation and commissioning) and actual start of operations, which may be months after the installation of the first motor at the site. As a side benefit, NFC communication can be used to communicate a wake-up trigger signal to a sensor device in deep sleep, that is with fully de-activated batteries. Aside from minimal depletion of energy reserves during storage (e.g. of spare and replacement units) and transport (self discharge only), benefits of deep sleep include safety for transportation, e.g. in air transport where active radios may be forbidden.

Furthermore, wireless field instruments, such as ABB's WirelessHART temperature and pressure transmitters, require special configuration data (e.g. a Network ID and Join Key) specific to each individual device before they can join the wireless network. Currently, a wired "service port" is used to configure these devices. However, to use it in the dust-and waterproof instrument, the housing has to be unscrewed to access the plug and plug in the cable from the configuration tool. Referring to the solution provided in Fig. 10, provision of a wireless service port, in which devices are identified by proximity and therefore do not need to join a complex network (therefore not needing any previous configuration), allows the process of opening and closing the transmitter housing to be omitted, and reduces the required time to ready such a transmitter for use in an industrial wireless network.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A sensor device (100), comprising:
- a first communication interface (120);
- a sensing element (110); and
- a second communication interface (140);
wherein the first communication interface (120) is used to communicate with a data processing unit (50), and the second communication interface (140) is used to receive information from a local apparatus (130) for configuration and/or identification of the sensor device, or to transmit information to said local apparatus (130), wherein the second communication interface and the apparatus being set up so that communication is performed by a means of communication that works only if the sensor device and apparatus are in close proximity, This might be achieved by using a means of communication that works only in the near field range of their respective antennas.

2. Apparatus and sensor device according to claim 1,
wherein the means of wireless communication of the second communication interface is Near-Field Communication (NFC).

3. Apparatus and sensor device according to claim 1,
where the means of wireless communication of the second communication interface is RFID.

4. Apparatus and sensor device according to any of claims 1-3,
wherein the sensor device is configured to utilize power in the communication signal of the second communication device to process and store data received from the second communication device and/or to send data in reply to said second communication device.

5. Apparatus and sensor device according to any of claims 1-4,
wherein the sensor device is configured to wake up from a sleep (or battery power save) mode on the basis of the first signal transmitted from the apparatus.

6. Apparatus and sensor device according to claim 5,
wherein to awaken from sleep (or battery power save) mode, the sensor device utilizes power from the signal from the apparatus, including such "deep sleep" modes where external energy is required in order to connect a battery to the sensor device.

7. Apparatus and sensor device according to any of claims 4-6,
wherein the sensor device is configured to utilize the power in the signal from the apparatus to store the configuration information in a memory of the sensor.

8. Apparatus and sensor device according to any of claims 4-7,
wherein the sensor device is configured to utilize the power in the signal from the apparatus to read information stored in a memory of the sensor and/or to send information to the apparatus in response to the signal.

9. Apparatus and sensor device according to any of claims 4-8,
wherein the sensor device is configured to transmit the configuration information or other information into a a communications network on the first communication interface or to receive an unique identifier or other configuration information required to sign up to a communications network on the first communication interface, triggered by and/or on the basis of information in a communication signal received from the apparatus through the second communication interface.

10. Apparatus and sensor device according to claim 9,
• wherein the apparatus is configured to obtain the configuration information from a database (60) on the basis of the information in the communication signal received from the sensor and/or to store configuration information in the database (60), a suitable communication interface on the apparatus, which may be WLAN, GSM, LTE or other long-range communication, is provided to access the database, andin particular, the apparatus may provide location information or sensor identifier information to the database, and retrieve configuration information which may be depending on location or identifier from the database, and write it to the sensor,
• additionally, location and identifier information, or other information e.g. taken during installation and commissioning or during servicing of the sensor, can be transmitted to the database by the apparatus and stored in the database, the database may be connected to, or be part of the data processing unit (50), and this information may be used in processing and evaluating the sensor data that is transmitted from the sensor device e.g. during normal operation after commissioning and
• a local copy of information from the database or the sensor may be created and maintained on the apparatus to allow for the functionality described above even in locations with sporadic network access.

11. Apparatus and sensor device according to any of claims 1-10,
wherein the apparatus is a smartphone or other readily available communication and data processing device with a suitable wireless interface and sensors useable for the functionalities required by each respective claim, or interfaces to install to it external sensors suitable for these functionalities.

12. Apparatus and sensor device according to any of claims 1-11,
wherein the sensor device consists of
• an electromagnetically shielded part (e.g. metal or metal-coated housing; containing electronic circuitry sensitive to electromagnetic emissions (ESD), and
• an unshielded part transparent to wireless communication (e.g. plastic housing), containing the antenna for the second communication interface
• protection circuitry on the electrical connections between the shielded and unshielded parts, that protects the electronics in the shielded part from electromacnetic emissions that may be pickedup by the antenna.

13. A sensor device according to claim 1-12,
wherein the second communication interface (140) is used to communicate with an add-on sensor module, consisting of a compatible communication interface and a sensing element, and optionally a microcontroller, microprocessor, or other analog or digital preprocessing or processing electronics or circuitry.

14. A sensor device according to claim 13,
wherein the add-on sensor module is is configured to utilize the power in the signal from the sensor device to power a measurement in the sensing element, process or preprocess the signal from that measurement, and/or send a response back to the sensor device.

15. A sensor device according to claim 13-14,
wherein the add-on sensor module is an RFID sensor or a surface-acoustic wave (SAW) sensor.

16. A system (200) for configuration of a sensor, comprising:
- an apparatus (10) according to any of claims 1-5;
- a sensor (40); and
- a communication device (50);
wherein, the apparatus is configured to receive the configuration information from the communication device.

17. A system (300) for configuration of a sensor, comprising:
- a sensor (100) according to any of claims 6-12; and
- a communication device (50);
wherein, the sensor is configured to receive the configuration information from the communication device.

18. A method (400) for configuration of a sensor, comprising:
a) utilising (410) a very short range wireless communication interface (20, 110) and a sensing element (30, 120) to identify a communication device (50) that is in close proximity to a sensor (40, 100) on the basis of a first signal transmitted from the communication device; and
b) utilising (420) the wireless interface to receive configuration information relating to the sensor from the identified communication device on the basis of the first signal and/or a second signal transmitted from the communication device.
